(19) Europäisches Patentamt / European Patent Office / Office européen des brevets

(11) EP 4 769 608 A1

(12) EUROPEAN PATENT APPLICATION
published in accordance with Art. 153(4) EPC

(43) Date of publication:
**01.07.2026 Bulletin 2026/27**

(21) Application number: **24908113.4**

(22) Date of filing: **19.12.2024**

(51) International Patent Classification (IPC):
***H01M 10/052*** *(2010.01)* ***H01M 4/525*** *(2010.01)*
***H01M 4/505*** *(2010.01)* ***H01M 4/131*** *(2010.01)*
***H01M 10/0569*** *(2010.01)* ***H01M 10/0567*** *(2010.01)*
***H01M 10/0568*** *(2010.01)* ***H01M 4/02*** *(2006.01)*

(52) Cooperative Patent Classification (CPC):
**H01M 4/02; H01M 4/131; H01M 4/505; H01M 4/525; H01M 10/052; H01M 10/0567; H01M 10/0568; H01M 10/0569;** Y02E 60/10

(86) International application number:
**PCT/KR2024/020707**

(87) International publication number:
**WO 2025/135830 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230187753**

(71) Applicant: **LG Energy Solution, Ltd.**
**Seoul 07335 (KR)**

(72) Inventors:
- **LEE, Jung Min**
  **Daejeon 34122 (KR)**
- **JI, Su Hyeon**
  **Daejeon 34122 (KR)**
- **KO, Jin Hyuck**
  **Daejeon 34122 (KR)**
- **LEE, Chul Haeng**
  **Daejeon 34122 (KR)**

(74) Representative: **Hoffmann Eitle**
**Patent- und Rechtsanwälte PartmbB**
**Arabellastraße 30**
**81925 München (DE)**

# (54) LITHIUM SECONDARY BATTERY

(57) The present invention relates to a lithium secondary battery including a positive electrode, a negative electrode, a separator placed between the positive electrode and the negative electrode, and a non-aqueous electrolyte, wherein the positive electrode includes a positive electrode active material, the positive electrode active material includes a lithium transition metal oxide represented by Formula A below, the non-aqueous electrolyte includes a lithium salt, an organic solvent, and an additive, the organic solvent includes linear carbonate, the linear carbonate includes diethyl carbonate, the diethyl carbonate is present in an amount of 5 to 25 vol% with respect to a total volume of the organic solvent, and the additive includes lithium bis(oxalato)borate.

[Formula A] $Li_{1+x}[Ni_aCo_bMn_cM^1_e]O_{2+w}$

In Formula A above, $0 \leq x \leq 0.5$, $a+b+c+d = 1$, $0.5 \leq a \leq 0.7$, $0 \leq b \leq 0.15$, $c=1-a-b-d$, $0 \leq d \leq 0.1$, $0 \leq b/a \leq 0.2$, $1 \leq a/c \leq 3$, and $0 \leq w \leq 1$, and $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

EP 4 769 608 A1

## Description

### TECHNICAL FIELD

The present invention relates to a lithium secondary battery.

### BACKGROUND ART

Lately, there has been a rapid expansion in the application of lithium secondary batteries to power storage supply of large-area devices such as automobiles and power storage devices, as well as power supply of electronic devices such as electrical, electronic, communication, and computer devices, resulting in a rising demand for high-capacity, high-output, and high-stability secondary batteries.

The lithium secondary batteries generally include a positive electrode containing a positive electrode active material, a negative electrode containing a negative electrode active material, an electrolyte serving as a medium for delivering lithium ions, and a separator. In this case, as the negative electrode active material, a carbon-based active material, a silicon-based active material, and the like may be used. In addition, as the positive electrode active material, a lithium transition metal oxide such as lithium cobalt oxide ($LiCoO_2$), lithium nickel oxide ($LiNiO_2$), and lithium nickel-cobalt-manganese composite transition metal oxide may be used.

Meanwhile, currently, a lithium nickel-cobalt-manganese composite transition metal oxide having a nickel content of at least 30 mol% with respect to a transition metal is mainly being studied for increasing the energy density of a positive electrode. However, when the nickel content in the lithium nickel-cobalt-manganese composite transition metal oxide is increased, the positive electrode goes through degradation in thermal stability.

To make sure that such an issue is prevented, an increase in operating voltage is needed to achieve the required energy density when lowering the nickel content in the lithium nickel-cobalt-manganese composite transition metal oxide, and upon this high-voltage operation, issues such as electrolyte side reactions at the positive electrode, reduced high-temperature durability, and increased resistance become more severe.

### DISCLOSURE OF THE INVENTION

### TECHNICAL PROBLEM

An object of the present invention is to overcome the limitations described above, and thus, an aspect of the present invention provides a lithium secondary battery using a lithium transition metal oxide with nickel content reduced to a certain level as a positive electrode active material, in which life performance and storage performance may be improved at high-voltage operation, and an increase in resistance may be significantly prevented.

### TECHNICAL SOLUTION

[1] According to an aspect of the present invention, provided is a lithium secondary battery including a positive electrode, a negative electrode, a separator placed between the positive electrode and the negative electrode, and a non-aqueous electrolyte, wherein the positive electrode includes a positive electrode active material, the positive electrode active material includes a lithium transition metal oxide represented by Formula A below, the non-aqueous electrolyte includes a lithium salt, an organic solvent, and an additive, the organic solvent includes linear carbonate, the linear carbonate includes diethyl carbonate, the diethyl carbonate is present in an amount of 5 to 25 vol% with respect to a total volume of the organic solvent, and the additive includes lithium bis(oxalato)borate.

[Formula A] $$Li_{1+x}[Ni_aCo_bMn_cM^1_d]O_{2+w}$$

In Formula A above, $0 \leq x \leq 0.5$, $a+b+c+d = 1$, $0.5 \leq a \leq 0.7$, $0 \leq b \leq 0.15$, $c=1-a-b-d$, $0 \leq d \leq 0.1$, $0 \leq b/a \leq 0.2$, $1 \leq a/c \leq 3$, and $0 \leq w \leq 1$, and $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

[2] The present invention provides the lithium secondary battery according to [1] above, wherein the lithium secondary battery has an operating voltage of 4.3 V or more.

[3] The present invention provides the lithium secondary battery according to at least one of [1] or [2] above, wherein the additive further includes a compound represented by Formula 1 below.

[Formula 1]

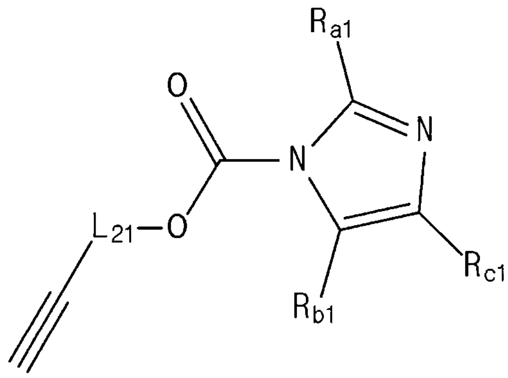

In Formula 1 above, $R_{a1}$, $R_{b1}$, and $R_{c1}$ are each independently hydrogen, an alkyl group having 1 to 3 carbon atoms, or -CN, and $L_{21}$ is an alkylene group having 1 to 3 carbon atoms.

[4] The present invention provides the lithium secondary battery according to at least one of [1] to [3] above, wherein the non-aqueous electrolyte contains 0.01 wt% to 10 wt% of the lithium bis(oxalato)borate.

[5] The present invention provides the lithium secondary battery according to at least one of [1] to [4] above, wherein the diethyl carbonate is present in an amount of 7 to 15 vol% with respect to a total volume of the organic solvent.

[6] The present invention provides the lithium secondary battery according to at least one of [1] to [5] above, wherein the organic solvent further includes cyclic carbonate.

[7] The present invention provides the lithium secondary battery according to at least one of [1] to [6] above, wherein the cyclic carbonate further includes ethylene carbonate.

[8] The present invention provides the lithium secondary battery according to at least one of [1] to [7] above, wherein the cyclic carbonate and the linear carbonate are present at a volume ratio of 5:95 to 40:60.

[9] The present invention provides the lithium secondary battery according to at least one of [1] to [8] above, wherein the additive further includes at least one selected from the group consisting of coumarine, fluoroethylene carbonate, vinylethylene carbonate, propane sultone, propene sultone, succinonitrile, adiponitrile, ethylene sulfate, lithium difluoro phosphate (LiDFP), lithium tetrafluoroborate ($LiBF_4$), lithium difluoro(oxalato)borate (LiDFOB), tris(trimethylsilyl) phosphate (TMSPa), and tris(trimethylsilyl) phosphite (TMSPi).

[10] The present invention provides the lithium secondary battery according to at least one of [1] to [9] above, wherein the non-aqueous electrolyte includes the lithium salt at a molar concentration of 0.5 M to 5.0 M.

[11] The present invention provides the lithium secondary battery according to at least one of [1] to [10] above, wherein the positive electrode active material is in the form of a single particle formed of one single nodule or in the form of a quasi-single particle, a composite of 30 or fewer nodules.

[12] The present invention provides the lithium secondary battery according to at least one of [1] to [11] above, wherein in Formula A above, $a/(b \times c)$ is in a range of 18 to 50.

## ADVANTAGEOUS EFFECTS

A lithium secondary battery of the present invention uses a lithium transition metal oxide in which nickel, cobalt, and manganese are adjusted to a specific range of content as a positive electrode active material, and includes a non-aqueous electrolyte containing diethyl carbonate in a specific amount as a linear carbonate, and containing lithium bis(oxalato)borate as an additive. The lithium secondary battery according to the present invention may have improved life performance and storage performance at high-voltage operation, and may significantly prevent an increase in resistance.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, it will be further understood that the terms "include," "comprise," or "have" specify the presence of stated features, numbers, steps, elements, or combinations thereof, but do not preclude the presence or addition of one or more

other features, numbers, steps, elements, or combinations thereof.

Meanwhile, prior to describing the present invention, unless otherwise specified in the present invention, "*" indicates a portion connected between ends of the same or different atoms or formulas.

In addition, as used herein, "a" and "b" in the description of "a to b carbon atoms" indicate the number of carbon atoms included in a specific functional group. That is, the functional group may include "a" to "b" carbon atoms. For example, the term "alkyl group having 1 to 5 carbon atoms" indicates an alkyl group including 1 to 5 carbon atoms, that is, $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, $(CH_3)_2CHCH_2CH_2$-, and the like.

In addition, as used herein, both an alkyl group or an aryl group may be substituted or unsubstituted. Unless otherwise defined, the term "substituted" indicates that at least one hydrogen bonded to carbon is substituted with an element other than hydrogen, and for example, it means being substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, a haloaryl group having 6 to 20 carbon atoms, and the like.

The term, average particle diameter ($D_{50}$) as used herein may be defined as a particle diameter at a cumulative volume of 50% in a particle size distribution curve of particles. The average particle diameter ($D_{50}$), for example, may be measured by using a laser diffraction method. The laser diffraction method generally allows the measurement of a particle size ranging from a submicron level to a few mm and may produce highly repeatable and high-resolution results.

As used herein, a BET specific surface area is measured through a BET method, and specifically may be calculated from an amount of nitrogen gas adsorbed at a liquid nitrogen temperature (77 K) using BELSORP-mini II from BEL Japan, INC.

Hereinafter, the present invention will be described in more detail.

## <u>Lithium secondary battery</u>

The present invention relates to a lithium secondary battery.

The lithium secondary battery according to the present invention includes a positive electrode, a negative electrode, a separator placed between the positive electrode and the negative electrode, and a non-aqueous electrolyte, wherein the positive electrode includes a positive electrode active material, the positive electrode active material includes a lithium transition metal oxide represented by Formula A below, the non-aqueous electrolyte includes a lithium salt, an organic solvent, and an additive, the organic solvent includes linear carbonate, the linear carbonate includes diethyl carbonate, the diethyl carbonate is present in an amount of 5 to 25 vol% with respect to a total volume of the organic solvent, and the additive includes lithium bis(oxalato)borate.

[Formula A] $Li_{1+x}[Ni_aCo_bMn_cM^1_d]O_{2+w}$

In Formula A above, $0 \leq x \leq 0.5$, $a+b+c+d = 1$, $0.5 \leq a \leq 0.7$, $0 \leq b \leq 0.15$, $c=1-a-b-d$, $0 \leq d \leq 0.1$, $b/a \leq 0.2$, $1 \leq a/c \leq 3$, and $0 \leq w \leq 1$, and $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

The lithium secondary battery includes a positive electrode, a negative electrode, a separator, and a non-aqueous electrolyte. Specifically, the lithium secondary battery includes a positive electrode, a negative electrode facing the positive electrode, a separator disposed between the positive electrode and the negative electrode, and a non-aqueous electrolyte. The lithium secondary battery may be manufactured by inserting an electrode assembly including the positive electrode, the negative electrode facing the positive electrode, the separator interposed between the positive electrode and the negative electrode into a battery case, and then injecting a non-aqueous electrolyte.

### (1)Positive electrode

The positive electrode includes a positive electrode active material.

The positive electrode active material includes a lithium transition metal oxide represented by Formula A below.

[Formula A] $Li_{1+x}[Ni_aCo_bMn_cM^1_d]O_{2+w}$

In Formula A above, $0 \leq x \leq 0.5$, $a+b+c+d = 1$, $0.5 \leq a \leq 0.7$, $0 \leq b \leq 0.15$, $c=1-a-b-d$, $0 \leq d \leq 0.1$, $0 \leq b/a \leq 0.2$, $1 \leq a/c \leq 3$, and $0 \leq w \leq 1$, and $M^1$ is at least one selected from W, Cu, Fe, V, Cr, Ti, Zr, Zn, Al, In, Ta, Y, La, Sr, Ga, Sc, Gd, Sm, Ca, Ce, Nb, Mg,

B, and Mo.

The lithium transition metal oxide represented by Formula A is differentiated from, for example, a high-nickel lithium transition metal oxide containing greater than 70 mol% of nickel with respect to metals excluding lithium. The high-nickel lithium transition metal oxide is undesirable in that the oxide contains a large amount of nickel, which causes degradation in thermal stability.

Meanwhile, the compound represented by Formula A above, having a lower content of nickel than the high-nickel lithium transition metal oxide, requires to be operated at high voltages (e.g., 4.35 V or greater) to increase the energy density of a positive electrode. However, at such high voltage operation, electrolyte side reactions are intensified, resulting in significant degradation in lifespan performance and storage performance, and degradation in high-temperature durability, which aggravates an increase in resistance. This is attributed to either the accelerated oxidation and decomposition of organic solvents (such as ethylene carbonate) at high voltage operation, which produces carbon dioxide ($CO_2$), or by Lewis acids such as HF and $PF_5$ formed by the decomposition of lithium salts (such as $LiPF_6$), which decompose a positive electrode film and elute transition metals of a positive electrode active material, causing structural collapse.

In the lithium secondary battery according to the present invention, using a positive electrode active material containing the lithium transition metal oxide represented by Formula A above for achieving both high energy density and excellent lifespan, and storage performance, a non-aqueous electrolyte contains diethyl carbonate in a specific amount as a linear carbonate, and contains lithium bis(oxalato)borate as an additive. The diethyl carbonate is a relatively stable solvent in both oxidation and reduction, and as described below, when the diethyl carbonate is used in a specific amount, decomposition of an organic solvent or a non-aqueous electrolyte may be prevented. In addition, when the diethyl carbonate and lithium bis(oxalato)borate are used in combination, a positive electrode interface may be stabilized or a durable positive electrode film may be formed. Consequently, a lithium secondary battery having a high energy density while exhibiting remarkably excellent life performance and storage performance and a low resistance increase rate is achievable.

The effect of improving battery performance at high voltage obtained by applying the non-aqueous electrolyte may be shown when a positive electrode active material including a lithium transition metal oxide containing Formula A is used. For example, in the case of high-nickel lithium transition metal oxides such as $Li[Ni_{0.8}Co_{0.1}Mn_{0.1}]O_2$ that do not satisfy the composition of Formula A, the proportion of Ni among transition metals or the molar ratio of Ni/Mn is very high, and changes in axis within the lattice due to increase and decrease in the oxidation number of Ni during charging and discharging are significant, and thus surface side reactions are intensified by Ni, which is unstable in terms of energy, thereby hardly achieving performance improvements through the organic solvent and additive. In addition, high-nickel lithium transition metal oxides such as $Li[Ni_{0.8}Co_{0.1}Mn_{0.1}]O_2$ have a high molar ratio of Ni/Mn, and thus, when operated at high voltage, undergo phase transitions, leading to the formation of a substantial amount of rock-salt structure on a surface. This hinders both lithium ion intercalation/deintercalation and the formation of a positive electrode film by the additives. In addition, lithium transition metal oxides that do not satisfy Formula A, such as $Li[Ni_{0.6}Co_{0.2}Mn_{0.2}]O_2$, has a high ratio of Co in the transition metal, which increases the irreversibility in the structure, and thus hardly have a performance improvement effect by forming a positive electrode film through additives. Accordingly, even when the non-aqueous electrolyte according to the present invention is used, it is difficult to achieve the desired improvements in lifespan performance and storage performance, if it is not the compound represented by Formula A.

In Formula A above, x may meet the following condition: $0 \leq x \leq 0.5$, specifically $0 \leq x \leq 0.2$.

In Formula A above, a may meet the following condition: $0.5 \leq a \leq 0.7$, specifically $0.55 \leq a \leq 0.65$.

In Formula A above, b meets the following condition: $0 \leq b \leq 0.15$. b corresponds to a molar percentage of Co among metals excluding lithium in the lithium transition metal oxide represented by Formula A, and according to the present invention, lowering the Co content may provide cost benefits, and relatively increasing the proportion of Mn may improve the structural stability of a positive electrode active material. Specifically, in Formula A above, b may meet the following condition: $0 \leq b \leq 0.1$.

In Formula A above, a and b meet the following condition: $0 \leq b/a \leq 0.2$. When b/a is greater than 0.2, the proportion of Co in the transition metal is very high, which increases irreversibility in the structure, thereby hardly having a performance improvement effect by forming a positive electrode film through additives. Specifically, in Formula A above, a and b may meet the following condition: $0.05 \leq b/a \leq 0.2$.

In Formula A above, a, b, c, and d meet the following conditions: $c=1-a-b-d$ and $1 \leq a/c \leq 3$. c corresponds to a molar percentage of Mn among metals excluding lithium in the lithium transition metal oxide represented by Formula A, and according to the present invention, the molar ratio of Ni to Mn is adjusted to $1 \leq a/c \leq 3$, thereby improving the structural stability of a positive electrode active material. Specifically, a and c may meet the following condition: $1.5 \leq a/c \leq 2.5$.

In Formula A above, $M^1$ may be considered as a doping element of lithium transition metal oxides, and specifically, $M^1$ may be at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo. In this case, d meet the following condition: $0 \leq d \leq 0.1$, specifically $0 \leq d \leq 0.05$.

In Formula A above, $a/(b \times c)$ may be in a range of 18 to 50, specifically 18 to 40, and more specifically 20 to 35.

Within the above range, the content of nickel, cobalt, and manganese in Formula A is harmoniously adjusted, thereby achieving both improved performance by forming a positive electrode film through an additives and improved structural stability of a positive electrode active material.

The positive electrode active material may be in the form of particles. Specifically, the positive electrode active material is in the form of a single particle formed of one single nodule or in the form of a quasi-single particle, a composite of 30 or fewer nodules, specifically in the form of a quasi-single particle, a composite of 2 to 20 nodules, more specifically 2 to 10 nodules, or in the form including both the single particle and the quasi-single particle. In this case, particle breakage is prevented when preparing an electrode of the positive electrode active material, and internal cracks caused by volume expansion/contraction of nodules during charge/discharge are prevented, resulting in improved high-temperature lifespan characteristics and high-temperature storage characteristics.

The positive electrode active material may have an average particle diameter ($D_{50}$) of 1 μm to 10 μm, specifically 2 μm to 8 μm, more specifically 3 μm to 7 μm, even more specifically 3 μm to 5 μm, and even more specifically 3.5 μm to 4.5 μm. When the above range is satisfied, excellent processability in electrode manufacturing may be achieved, enhanced electrolyte impregnation may increase electrochemical properties, and reduced resistance and improved output characteristics may be obtained.

The positive electrode active material may have a specific surface area of 0.1 $m^2/g$ to 3.0 $m^2/g$, specifically 0.3 $m^2/g$ to 2.5 $m^2/g$, more specifically 0.4 $m^2/g$ to 1.8 $m^2/g$, even more specifically 0.5 $m^2/g$ to 1.0 $m^2/g$, and even more specifically 0.7 $m^2/g$ to 0.9 $m^2/g$. When the above range is satisfied, the rolling characteristics of an electrode may be improved, and particle breakage may be reduced, thereby suppressing side reactions with an electrolyte.

The positive electrode may include a positive electrode current collector and a positive electrode active material layer disposed on at least one surface of the positive electrode current collector. In this case, the positive electrode active material may be included in the positive electrode active material layer.

The positive electrode current collector is not particularly limited as long as it has conductivity without causing chemical changes in batteries. To be specific, the positive electrode current collector may include at least one selected from the group consisting of copper, stainless steel, aluminum, nickel, titanium, fired carbon, and an aluminum-cadmium alloy, and may preferably include aluminum.

The positive electrode current collector may generally have a thickness of 3 μm to 500 μm.

The positive electrode collector may have fine irregularities formed on a surface thereof to improve bonding strength of a positive electrode active material. For example, the positive electrode current collector may be used in various forms such as a film, a sheet, a foil, a net, a porous body, a foam body, and a non-woven fabric body.

The positive electrode active material layer may be disposed on at least one surface of the positive electrode current collector, specifically, on one surface or both surfaces of the positive electrode current collector.

The positive electrode active material layer may include the positive electrode active material in an amount of 80 wt% to 99 wt%, preferably 92 wt% to 98.5 wt%, in consideration of exhibiting sufficient capacity of the positive electrode active material.

In addition, the positive electrode active material is described above, and thus the description thereof will not be provided again.

The positive electrode active material layer may further include a binder and a conductive material, along with the positive electrode active material.

The binder is a component that supports the binding of an active material and a conductive material and the binding to a collector, and may specifically include at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and may preferably include polyvinylidene fluoride.

The binder may be included in an amount of 1 wt% to 20 wt%, preferably 1.2 wt% to 10 wt% in the positive electrode active material layer for the purpose of sufficiently securing the binding strength between components such as the positive electrode active material.

The conductive material may be used to support and improve the conductivity of a secondary battery, and is not particularly limited as long as it has conductivity without causing chemical changes in batteries. Specifically, the positive electrode conductive material may include at least one selected the group consisting of graphite such as natural graphite or artificial graphite; carbon black such as acetylene black, Ketjen black, channel black, furnace black, lamp black, and thermal black; conductive fibers such as carbon fibers and metal fibers; conductive tubes such as carbon nanotubes; fluorocarbon; metal powder such as aluminum and nickel powder; conductive whiskers such as zinc oxide and potassium titanate; conductive metal oxides such as titanium oxide; and polyphenylene derivatives, and may preferably include carbon nanotubes for the purpose of improving conductivity.

The conductive material may be included in an amount of 1 wt% to 20 wt%, preferably 1.2 wt% to 10 wt%, in the positive electrode active material layer for the purpose of sufficiently securing electrical conductivity.

The positive electrode active material layer may have a thickness of 30 μm to 400 μm, preferably 40 μm to 200 μm.

A positive electrode slurry including a positive electrode active material and optionally a binder, a conductive material, and a solvent for forming a positive electrode slurry may be applied onto the positive electrode current collector, and then dried and roll pressed to prepare the positive electrode.

The solvent for forming a positive electrode slurry may include an organic solvent such as N-methyl-2-pyrrolidone (NMP). The positive electrode slurry may have a solid content of 40 wt% to 90 wt%, specifically 50 wt% to 80 wt%.

(2) Negative electrode

The negative electrode may face the positive electrode.

The negative electrode includes a negative electrode active material,

The negative electrode active material is a material enabling intercalation/deintercalation of lithium ions, and may include at least one selected from the group consisting of carbon-based active materials, (semi-)metal-based active materials, and lithium metal, and specifically may include at least one selected from carbon-based active materials and (semi-)metal-based active materials.

The carbon-based active material may include at least one selected from the group consisting of graphite, hard carbon, soft carbon, carbon black, graphene, and fibrous carbon, and may preferably include graphite. The graphite may be, for example, at least one of artificial graphite or natural graphite.

The carbon-based active material may have an average particle diameter ($D_{50}$) of be 10 μm to 30 μm, preferably 15 μm to 25 μm, in terms of ensuring structural stability upon charging and discharging and reducing side reactions with an electrolyte.

Specifically, the (semi-)metal-based active material may include at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; oxide of at least one (semi-)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); and lithium vanadium oxide.

More specifically, the (semi-)metal-based active material may include a silicon-based active material.

The silicon-based active material may include a compound represented by $SiO_x$ ($0 \leq x < 2$). $SiO_2$ does not react with lithium ions and thus is not able to store lithium, and accordingly, x is preferably within the above range, and more preferably, the silicon-based active material may be SiO.

The silicon-based active material may have an average particle diameter ($D_{50}$) of 1 μm to 30 μm, preferably 2 μm to 15 μm, in terms of ensuring structural stability upon charging and discharging and reducing side reactions with an electrolyte.

The negative electrode may include a negative electrode current collector and a negative electrode active material layer disposed on at least one surface of the negative electrode current collector. In this case, the negative electrode active material may be included in the negative electrode active material layer.

The negative electrode current collector is not particularly limited as long as it has conductivity without causing chemical changes in batteries. Specifically, copper, stainless steel, aluminum, nickel, titanium, fired carbon, or copper or stainless steel that is surface-treated with carbon, nickel, titanium, silver, or the like may be used as the negative electrode current collector.

The negative electrode current collector may generally have a thickness of 3 μm to 500 μm.

The negative electrode current collector may have fine irregularities formed on a surface thereof to improve bonding strength of a negative electrode active material. For example, the negative electrode current collector may be used in various forms such as a film, a sheet, a foil, a net, a porous body, a foam body, and a non-woven fabric body.

The negative electrode active material layer may be disposed on at least one surface of the negative electrode current collector, specifically, on one surface or both surfaces of the negative electrode current collector.

The negative electrode active material layer may include the negative electrode active material in an amount of 60 wt% to 99 wt%, preferably 75 wt% to 95 wt%.

In addition, other descriptions of the negative electrode active material are given above, and thus will not be provided again.

The negative electrode active material layer may further include a binder and a conductive material, along with the negative electrode active material.

The binder is used to improve the performance of batteries through improved adhesion between the negative electrode active material layer and the negative electrode current collector, and may include, for example, at least any one selected from the group consisting of a polyvinylidene fluoride-hexafluoropropylene copolymer (PVDF-co-HFP), polyvinylidene fluoride (PVDF), polyacrylonitrile, polymethylmethacrylate, polyvinyl alcohol, carboxymethylcellulose (CMC),

starch, hydroxypropylcellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, and a material in which hydrogen thereof is substituted with Li, Na, or Ca, or may also include various copolymers thereof.

The binder may be included in the negative electrode active material layer in an amount of 0.5 wt% to 10 wt%, preferably, 1 wt% to 5 wt%.

The conductive material is not particularly limited as long as it has conductivity without causing chemical changes in batteries, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon; metal powder such as aluminum and nickel powders; conductive whiskers such as zinc oxide whiskers and potassium titanate whiskers; conductive metal oxide such as titanium oxide; or polyphenylene derivatives, may be used.

The negative electrode active material layer may include the conductive material in an amount of 0.5 wt% to 10 wt%, preferably, 1 wt% to 5 wt%.

The negative electrode active material layer may have a thickness of 10 μm to 200 μm, preferably 20 μm to 150 μm.

A negative electrode slurry including a negative electrode active material and/or a binder, a conductive material, and a solvent for forming a negative electrode slurry may be applied onto at least one surface of the negative electrode current collector, and then dried and roll pressed to prepare the negative electrode.

The solvent for forming the negative electrode slurry may include at least one selected from the group consisting of distilled water, N-methyl-2-pyrrolidone (NMP), ethanol, methanol, and isopropyl alcohol, preferably distilled water, in terms of facilitating the dispersion of, for example, the negative electrode active material, the binder and/or the conductive material. The negative electrode slurry may have a solid content of 30 wt% to 80 wt%, specifically 40 wt% to 70 wt%.

**(3) Separator**

The separator may be interposed between the positive electrode and the negative electrode.

A typically used porous polymer film, for example, a porous polymer film prepared from a polyolefin-based polymer, such as an ethylene homopolymer, a propylene homopolymer, an ethylene/butene copolymer, an ethylene/-hexene copolymer, and an ethylene/methacrylate copolymer, may be used alone or in a lamination therewith as the separator. Also, a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer component may be used to secure heat resistance or mechanical strength, and the separator having a single layer or multilayer structure may be used.

**(4) Non-aqueous electrolyte**

The non-aqueous electrolyte includes a lithium salt, an organic solvent, and an additive,

1) Lithium salt

As a lithium salt used in the present invention, various lithium salts commonly used in non-aqueous electrolytes for lithium secondary batteries may be used without limitation. For example, the lithium salt may include $Li^+$ as a cation, and may include at least any one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$ as an anion.

Specifically, the lithium salt may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$). Specifically, the lithium salt may include at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$), and LiBETI ($LiN(SO_2CF_2CF_3)_2$).

The nonaqueous electrolyte may include the lithium salt at a concentration of 0.5 M to 5 M, specifically 0.8 M to 4 M, and more specifically 0.8 M to 2.0 M. When the concentration of the lithium salt satisfies the above range, lithium ion yield ($Li^+$ transference number) and the dissociation degree of lithium ions are improved, and accordingly, batteries may have improved output characteristics.

2) Organic solvent

An organic solvent is a non-aqueous solvent commonly used in lithium secondary batteries, and is not particularly limited as long as its decomposition due to an oxidation reaction or the like may be minimized in the charging/discharging process of secondary batteries.

The organic solvent includes linear carbonate. The linear carbonate includes diethyl carbonate.

The diethyl carbonate is a relatively stable solvent in both oxidation and reduction, and thus the oxidative decomposition of the organic solvent may be suppressed, and gas generation caused by electrolyte side reactions may be suppressed.

The diethyl carbonate is included in an amount of 5 to 25 vol% with respect to the volume of the organic solvent. When the diethyl carbonate is used in an amount less than 5 vol% with respect to the volume of the organic solvent, the desired effect of suppressing the decomposition of the organic solvent and reducing the gas generation may not be achieved. When the diethyl carbonate is used in an amount greater than 25 vol% with respect to the volume of the organic solvent, electrolyte properties deteriorate and resistance increases due to a decrease in ionic conductivity and an increase in viscosity. In addition, the effect according to the specific range of content of the diethyl carbonate is achieved in combination with the additive described below. For example, when the lithium bis(oxalato)borate is not used as an additive, even when the diethyl carbonate is used at 5 to 25 vol% with respect to the volume of the organic solvent, a uniform and thin film may not be formed on the positive and negative electrode interfaces, resulting in reduced durability, and accordingly, the desired improvements in life performance, storage performance, and resistance reduction together may not be achieved.

The diethyl carbonate may be included in an amount of 7 to 20 vol%, more specifically 7 to 15 vol%, and even more specifically 7 to 12 vol%, with respect to the volume of the organic solvent.

The linear carbonate may include at least one selected from the group consisting of dimethyl carbonate (DMC), dipropyl carbonate, ethylmethyl carbonate (EMC), methylpropyl carbonate, and ethylpropyl carbonate in addition to the diethyl carbonate, and more specifically, may further include ethylmethyl carbonate (EMC), in terms of contributing to low viscosity and low dielectric constant. When the linear carbonate includes diethyl carbonate and ethylmethyl carbonate, the diethyl carbonate and ethylmethyl carbonate may be present at the volume ratio of 5:95 to 50:50, specifically 10:90 to 30:70, and more specifically 10:90 to 20:80.

The organic solvent may further include cyclic carbonate. The cyclic carbonate is a high viscosity organic solvent with a high dielectric constant, which is an organic solvent that may easily dissociate lithium salts in an electrolyte. The cyclic carbonate may cause side reactions due to high-voltage operation or collapse of a positive electrode active material and generation of HF at high voltage operation, thereby inducing gas generation. However, this may be significantly prevented by using diethyl carbonate in a specific amount as the organic solvent described above and forming a solid film through the use of a specific additive.

The cyclic carbonate may include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and may more specifically include at least one selected from the group consisting of ethylene carbonate (EC) and fluoroethylene carbonate (FEC), and may even more specifically include ethylene carbonate (EC).

When a cyclic carbonate is included in the organic solvent, the cyclic carbonate and the linear carbonate may be mixed in a volume ratio of 5:95 to 40:60, specifically, a volume ratio of 10:90 to 35:65. When the mixing ratio of the cyclic carbonate and the linear carbonate satisfies the above range, both high dielectric constant and low viscosity are satisfied, and excellent ionic conductivity may be achieved.

Meanwhile, the organic solvent may be used by adding an organic solvent commonly used in a non-aqueous electrolyte without limitation, when needed. For example, at least one organic solvent selected from an ester-based organic solvent, an ether-based organic solvent, a glyme-based solvent, and a nitrile-based organic solvent may be further included.

The ester-based organic solvent may include at least one selected from the group consisting of methyl acetate, ethyl acetate, propyl acetate, methyl propionate, ethyl propionate, propyl propionate, butyl propionate, $\gamma$-butyrolactone, $\gamma$-valerolactone, $\gamma$-caprolactone, $\delta$-valerolactone, and $\varepsilon$-caprolactone.

As the ether-based solvent, any one selected from the group consisting of dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), or a mixture of two or more thereof may be used, but is the embodiment is not limited thereto.

The glyme-based solvent, as a solvent having higher dielectric constant and a lower surface tension than a linear carbonate-based organic solvent, and being less reactive with metal, may include at least one selected from the group consisting of dimethoxyethane (glyme, DME), diethoxyethane, digylme, tri-glyme, and tetra-glyme (TEGDME), but is not limited thereto.

The nitrile-based solvent may include at least one selected from the group consisting of acetonitrile, propionitrile,

butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and the like, but is not limited thereto.

4) Additive

The non-aqueous electrolyte includes additives.
The additive includes lithium bis(oxalato)borate (LiBOB).
The lithium bis(oxalato)borate may form a film on a positive electrode when a lithium secondary battery is operated at a high voltage (e.g., 4.3 V or more). The lithium bis(oxalato)borate may form a highly durable positive electrode film to stabilize a positive electrode interface or act as a Lewis acid to prevent HF attack. Accordingly, when the lithium bis(oxalato)borate is combined with the positive electrode active material (containing the compound represented by Formula A) according to the present invention, which requires high voltage operation to increase energy density, electrolyte side reactions may be significantly prevented and a high level of improvement in lifespan performance and storage performance may be achieved. Conversely, for example, when a high-nickel lithium transition metal oxide is used as a positive electrode active material, a lithium secondary battery is operated at a low voltage (e.g., 4.2 V), and thus the additive is likely to form a film on a negative electrode rather than a positive electrode, and accordingly, the purpose of the present invention to prevent electrolyte side reactions of the positive electrode may not sufficiently achieved.
Meanwhile, the improvement in durability of the positive electrode film and the positive electrode interface stabilization through the use of the lithium bis(oxalato)borate may be achieved through the use of the above-described diethyl carbonate in a specific amount. When the diethyl carbonate is not used in an amount of 5 to 25 volume% with respect to the volume of the organic solvent, even when the lithium bis(oxalato)borate is used as an additive, long-term high-voltage durability may not be secured, and accordingly, the desired improvements in life performance, storage performance, and resistance reduction together may not be achieved.
The lithium bis(oxalato)borate may be included in an amount of 0.01 wt% to 10 wt%, specifically 0.1 wt% to 5 wt%, more specifically 0.05 wt% to 2.5 wt%, more specifically 0.1 wt% to 1 wt%, and specifically 0.3 wt% to 1 wt% in the non-aqueous electrolyte, and when present in the above range, the above-described effect of improving the life performance and storage performance of a secondary battery is achieved, and an increase in resistance due to excessive use of additives may be prevented, which is desirable.
The additive may further include a compound represented by Formula 1 below. In this case, the effect of preventing decomposition of the positive electrode film by HF and the effect of enhancing durability of the positive electrode film may be improved to a desirable level, and it is particularly desirable in that excellent improvements in gas reduction and resistance reduction effects are achievable.

[Formula 1]

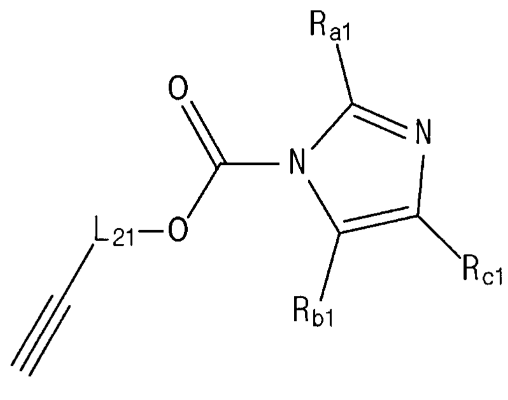

In Formula 1 above, $R_{a1}$, $R_{b1}$, and $R_{c1}$ are each independently hydrogen, an alkyl group having 1 to 3 carbon atoms, or -CN, and $L_{21}$ is an alkylene group having 1 to 3 carbon atoms.
In Formula 1 above, $R_{a1}$, $R_{b1}$, and $R_{c1}$ are each independently hydrogen, an alkyl group having 1 to 3 carbon atoms, or -CN, specifically, may each independently be hydrogen or an alkyl group having 1 to 2 carbon atoms, and more specifically, may each be hydrogen. Within the above range, in the compound represented by Formula 1, an imidazole group included therein suppresses the generation of Lewis acids such as HF and $PF_5$, while the nitrogen element acts as a Lewis base to remove Lewis acids generated in an electrolyte, and a propargyl functional group readily reducible at a terminal end is included, thereby forming an electrode film having high passivation ability and consequently preventing

additional reduction decomposition reactions caused by film instability and improving the high-temperature durability of the electrode.

In Formula 1 above, $L_{21}$ may be an alkylene group having 1 to 3 carbon atoms, specifically a methylene group or an ethylene group, and more specifically a methylene group.

Specifically, the compound represented by Formula 1 above may include a compound represented by Formula 1-1 below.

[Formula 1-1]

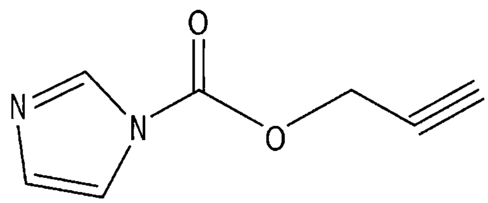

When the additive includes lithium bis(oxalato)borate and the compound represented by Formula 1, the compound represented by Formula 1 may be included in an amount of specifically 0.05 wt% to 2.5 wt%, more specifically 0.1 wt% to 1 wt%.

The additive may further include an additional additive.

The additive may further include at least one selected from the group consisting of coumarine, fluoroethylene carbonate, vinylethylene carbonate, propane sultone, propene sultone, succinonitrile, adiponitrile, ethylene sulfate, lithium difluoro phosphate (LiDFP), lithium tetrafluoroborate ($LiBF_4$), lithium difluoro(oxalato)borate (LiDFOB), tris(trimethylsilyl) phosphate (TMSPa), and tris(trimethylsilyl) phosphite (TMSPi).

The non-aqueous electrolyte may include the additional additive in an amount of 0.1 wt% to 15 wt%.

The lithium secondary battery of the present invention may have an operating voltage of 4.3 V or more, specifically 4.35 V or more. The lithium secondary battery of the present invention may achieve excellent energy density at high operating voltages and improved lifespan performance and storage performance, through the combination of a positive electrode and a non-aqueous electrolyte described above.

An outer shape of the lithium secondary battery of the present invention is not particularly limited, but a cylindrical type using a can, a prismatic type, a pouch type, or a coin type may be used.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

## Examples and Comparative Examples

### Example 1

(Preparation of non-aqueous electrolyte)

As an organic solvent, a mixture of ethylene carbonate (EC), ethylmethyl carbonate (EMC), and diethyl carbonate (DEC) at a volume ratio of 20:70:10 was used.

As a lithium salt, $LiPF_6$ and lithium bis(oxalato)borate were added to the organic solvent to prepare a non-aqueous electrolyte.

The $LiPF_6$ was included at a molar concentration of 1.2 M in the non-aqueous electrolyte.

0.5 wt% of the lithium bis(oxalato)borate was included in the non-aqueous electrolyte.

(Manufacture of lithium secondary battery)

A positive electrode active material ($Li[Ni_{0.6}Co_{0.1}Mn_{0.3}]O_2$), a conductive material (carbon nanotube), and a binder (polyvinylidene fluoride) were added in a weight ratio of 97.0:1.2:1.8 to N-methyl-2-pyrrolidone (NMP) as a solvent to prepare a positive electrode slurry (solid content: 72 wt%). The positive electrode slurry was applied onto one surface of a positive electrode current collector (Al thin film) having a thickness of 15 μm, and then dried and roll-pressed to form a positive electrode active material layer (thickness: 137 μm), which was used as a positive electrode. The positive electrode

active material was in the form of a single particle, had an average particle diameter ($D_{50}$) of 3.9 μm, and a BET surface area of 0.86 $m^2/g$.

A negative electrode active material (graphite), a conductive material (carbon black), and a binder (styrene-butadiene rubber and carboxymethyl cellulose) were added in a weight ratio of 97.4:0.5:2.1 to distilled water as a solvent to prepare a negative electrode slurry (solid content: 53 wt%) . The negative electrode slurry was applied onto one surface of a negative electrode current collector (Cu thin film) having a thickness of 15 μm, and then dried and roll-pressed to form a negative electrode active material layer (thickness: 176 μm), which was used as a negative electrode.

A polyethylene porous film separator was interposed between the prepared positive and negative electrodes in a dry room, and then the prepared non-aqueous electrolyte was injected to prepare a lithium secondary battery.

**Example 2**

A lithium secondary battery was manufactured in the same manner as in Example 1, except that a mixture of ethylene carbonate (EC), ethylmethyl carbonate (EMC), and diethyl carbonate (DEC) at a volume ratio of 20:65:15 was used as an organic solvent.

**Example 3**

A lithium secondary battery were manufactured in the same manner as in Example 1, except that the compound represented by Formula 1-1 above was further included in a non-aqueous electrolyte in an amount of 0.5 wt%.

**Comparative Example 1**

A lithium secondary battery was manufactured in the same manner as in Example 1, except that a mixture of ethylene carbonate (EC) and ethylmethyl carbonate (EMC) at a volume ratio of 20:80 was used as an organic solvent.

**Comparative Example 2**

A lithium secondary battery was manufactured in the same manner as in Example 1, except that a mixture of ethylene carbonate (EC), ethylmethyl carbonate (EMC), and diethyl carbonate (DEC) at a volume ratio of 20:78:2 was used.

**Comparative Example 3**

A lithium secondary battery was manufactured in the same manner as in Example 1, except that a mixture of ethylene carbonate (EC), ethylmethyl carbonate (EMC), and diethyl carbonate (DEC) at a volume ratio of 20:40:30 was used.

**Comparative Example 4**

A lithium secondary battery was manufactured in the same manner as in Example 1, except that a mixture of ethylene carbonate (EC), ethylmethyl carbonate (EMC), and dimethyl carbonate (DMC) at a volume ratio of 20:70:10 was used.

**Comparative Example 5**

A lithium secondary battery was manufactured in the same manner as in Example 1, except that lithium bis(oxalato)borate was not included in a non-aqueous electrolyte.

**Comparative Example 6**

A lithium secondary battery was manufactured in the same manner as in Example 1, except that lithium bis(oxalato)borate was not included in a non-aqueous electrolyte and vinylene carbonate was added to a non-aqueous electrolyte in an amount of 0.5 wt%.

**Experimental Examples**

**Experimental Example 1: Evaluation of high temperature cycle performance - resistance increase rate**

As one cycle, the lithium secondary batteries of Examples 1 to 3 and Comparative Examples 1 to 6 manufactured above were charged up to 4.35 V and 0.05 C in the conditions of CC/CV and 0.33 C at 45 °C using an electrochemical charger and discharger and then discharged up to 2.5 V in the conditions of CC and 0.33 C, which was considered one cycle, and 400 charge-discharge cycles were performed.

After one cycle of charging and discharging, the discharge capacity after one cycle was measured using an electrochemical charger and discharger, a state of charge (SOC) was adjusted to 50%, and a pulse of 2.5 C was then applied for 10 seconds to calculate initial resistance through a difference between a voltage before the pulse application and a voltage after the pulse application.

After 400 cycles of charging and discharging, the resistance after 400 cycles was calculated in the same manner as above, the resistance increase rate was calculated using the following equation, and the results are shown in Table 1 below.

Resistance increase rate (%) = (resistance after 400th cycle - initial resistance)/initial resistance $\times$ 100

**Experimental Example 2: Evaluation of high temperature cycle performance - volume increase rate**

As one cycle, the lithium secondary batteries of Examples 1 to 3 and Comparative Examples 1 to 6 manufactured above were charged up to 4.35 V and 0.05 C in the conditions of CC/CV and 0.33 C at 45 °C using an electrochemical charger and discharger and then discharged up to 2.5 V in the conditions of CC and 0.33 C, which was considered one cycle, and 400 charge-discharge cycles were performed.

In this case, the volume of the lithium secondary batteries before performing charge and discharge (initial volume) and the volume of the lithium secondary batteries after 400 cycles were measured, and volume increase rate was calculated through Equation below, and the results are shown in Table 1 below.

Volume increase rate (%) = {(volume of lithium secondary battery after 400 cycles - initial volume)/(initial volume)} $\times$ 100

[Table 1]

| | Experimental Example 1 | Experimental Example 2 |
|---|---|---|
| | Resistance increase rate (%) | Volume increase rate (%) |
| Example 1 | 23.2 | 18.8 |
| Example 2 | 24.5 | 16.7 |
| Example 3 | 15.5 | 15.3 |
| Comparative Example 1 | 30.7 | 32.4 |
| Comparative Example 2 | 30.4 | 31.6 |
| Comparative Example 3 | 31.1 | 15.9 |
| Comparative Example 4 | 59.5 | 50.3 |
| Comparative Example 5 | 48.3 | 37.7 |
| Comparative Example 6 | 46.6 | 42.6 |

Referring to Table 1 above, it is determined that the lithium secondary batteries of Examples 1 to 3, which include a positive electrode including a positive electrode active material containing a lithium transition metal oxide represented by Formula A above; and a non-aqueous electrolyte containing a specific amount of diethyl carbonate as an organic solvent and lithium bis(oxalato)borate as an additive exhibited a significant reduction in both resistance increase rate and volume increase rate during high-voltage, high-temperature cycle charge/discharge, compared to Comparative Examples 1 to 6.

**Reference Example**

Reference Example A: a case where $Li[Ni_{0.8}Co_{0.1}Mn_{0.1}]O_2$ was used as a positive electrode active material.

Reference Example 1A

(1) Preparation of non-aqueous electrolyte

The same non-aqueous electrolyte used in Example 1 was used.

(2) Manufacture of lithium secondary battery

A positive electrode active material ($Li[Ni_{0.8}Co_{0.1}Mn_{0.1}]O_2$), a conductive material (carbon nanotube), and a binder (PVDF) were added in a weight ratio of 96.78:1.20:2.02 to N-methyl-2-pyrrolidone (NMP) as a solvent to prepare a positive electrode mixture slurry (solid content: 75.5 wt%). The positive electrode mixture slurry was applied onto one surface of a positive electrode current collector (Al thin film), and then dried and roll pressed to prepare a positive electrode. The positive electrode active material was in the form of a secondary particle in which two or more primary particles are assembled.

A negative electrode active material (natural graphite), a conductive material (carbon black), and a binder (styrene-butadiene rubber and carboxymethyl cellulose) were added in a weight ratio of 96.15:0.50:3.35 to distilled water as a solvent to prepare a negative electrode mixture slurry (solid content: 26 wt%). The negative electrode mixture slurry was applied to one surface of a negative electrode current collector (Cu thin film) having a thickness of 15 μm, and then dried and roll-pressed to prepare a negative electrode.

A polyethylene porous film separator was interposed between the prepared positive and negative electrodes in a dry room, and then the prepared non-aqueous electrolyte was injected to prepare a secondary battery.

Reference Example 2A

A lithium secondary battery was manufactured in the same manner as in Reference Example 1A, except that the non-aqueous electrolyte used in Comparative Example 2 was used as a non-aqueous electrolyte.

Reference Example 3A

A lithium secondary battery was manufactured in the same manner as in Reference Example 1A, except that the non-aqueous electrolyte used in Comparative Example 3 was used as a non-aqueous electrolyte.

Reference Example 4A

A lithium secondary battery was manufactured in the same manner as in Reference Example 1A, except that the non-aqueous electrolyte used in Comparative Example 5 was used as a non-aqueous electrolyte.

**Reference Experimental Example A-1: Evaluation of high temperature cycle performance - resistance increase rate**

The lithium secondary batteries of Reference Examples 1A to 4A manufactured above were charged up to 4.2 V (1/40 C) in the conditions of CC/CV and 0.33 C at 45 °C using an electrochemical charger and discharger, and 400 cycles of charging and discharging were performed with discharging up to 2.5 V in the conditions of CC and 0.33 C as one cycle.

After one cycle of charging and discharging, the discharge capacity after one cycle was measured using an electrochemical charger and discharger, a state of charge (SOC) was adjusted to 50%, and a pulse of 2.5 C was then applied for 10 seconds to calculate initial resistance through a difference between a voltage before the pulse application and a voltage after the pulse application.

After 400 cycles of charging and discharging, the resistance after 400 cycles was calculated in the same manner as above, the resistance increase rate was calculated using the following equation, and the results are shown in Table 2 below.

Resistance increase rate (%) = (resistance after 400th cycle - initial resistance)/initial resistance × 100

**Reference Experimental Example A-2**

The lithium secondary batteries of Reference Examples 1A to 4A manufactured above were charged up to 4.2 V (1/40 C) in the conditions of CC/CV and 0.33 C at 45 °C using an electrochemical charger and discharger, and 400 cycles of charging and discharging were performed with discharging up to 2.5 V in the conditions of CC and 0.33 C as one cycle.

In this case, the volume of the lithium secondary batteries before performing charge and discharge (initial volume) and the volume of the lithium secondary batteries after 400 cycles were measured, and volume increase rate was calculated through Equation below, and the results are shown in Table 2 below.

Volume increase rate (%) = {(volume of lithium secondary battery after 400 cycles - initial volume)/(initial volume)} × 100

[Table 2]

| | Reference Experimental Example A-1 | Reference Experimental Example A-2 |
|---|---|---|
| | Resistance increase rate (%) | Volume increase rate (%) |
| Reference Example 1A | 27.9 | 6.1 |
| Reference Example 2A | 24.6 | 7.4 |
| Reference Example 3A | 32.5 | 5.9 |
| Reference Example 4A | 18.8 | 6.8 |

Referring to Table 2 above, in the case where $Li[Ni_{0.8}Co_{0.1}Mn_{0.1}]O_2$ was used as the positive electrode active material, it is seen that the secondary battery of Reference Example 1A, which used a non-aqueous electrolyte containing a specific amount of diethyl carbonate as an organic solvent and lithium bis(oxalato)borate as an additive, had no improvement in resistance and volume increase rate, compared to the secondary batteries of Reference Examples 2A to 4A. Accordingly, it is seen that the non-aqueous electrolyte according to the present invention may achieve the desired effect when the lithium transition metal oxide represented by Formula A is used as a positive electrode active material.

Reference Example B: a case where $Li[Ni_{0.6}Co_{0.2}Mn_{0.2}]O_2$ was used as a positive electrode active material.

Reference Example 1B

(1) Preparation of non-aqueous electrolyte

The same non-aqueous electrolyte used in Example 1 was used.

(2) Manufacture of lithium secondary battery

A positive electrode active material ($Li[Ni_{0.6}Co_{0.2}Mn_{0.2}]O_2$), a conductive material (carbon nanotube), and a binder (PVDF) were added in a weight ratio of 96:2:2 to N-methyl-2-pyrrolidone (NMP) as a solvent to prepare a positive electrode mixture slurry (solid content: 75 wt%). The positive electrode mixture slurry was applied to one surface of a positive electrode collector (Al thin film) having a thickness of 140 μm, and then dried and roll-pressed to prepare a positive electrode. The positive electrode active material was in the form of a secondary particle in which two or more primary particles are assembled.

A negative electrode active material (natural graphite), a conductive material (carbon black), and a binder (styrene-butadiene rubber and carboxymethyl cellulose) were added in a weight ratio of 96.15:0.50:3.35 to distilled water as a solvent to prepare a negative electrode mixture slurry (solid content: 26 wt%). The negative electrode mixture slurry was applied to one surface of a negative electrode current collector (Cu thin film) having a thickness of 15 μm, and then dried and roll-pressed to prepare a negative electrode.

A polyethylene porous film separator was interposed between the prepared positive and negative electrodes in a dry room, and then the prepared non-aqueous electrolyte was injected to prepare a secondary battery.

Reference Example 2B

A lithium secondary battery was manufactured in the same manner as in Reference Example 1B, except that the non-aqueous electrolyte used in Comparative Example 2 was used as a non-aqueous electrolyte.

Reference Example 3B

A lithium secondary battery was manufactured in the same manner as in Reference Example 1B, except that the

non-aqueous electrolyte used in Comparative Example 3 was used as a non-aqueous electrolyte.

Reference Example 4B

A lithium secondary battery was manufactured in the same manner as in Reference Example 1B, except that the non-aqueous electrolyte used in Comparative Example 5 was used as a non-aqueous electrolyte.

**Reference Experimental Example B-1: Evaluation of high temperature cycle performance - resistance increase rate**

The lithium secondary batteries of Reference Examples 1B to 4B manufactured above were charged up to 4.2 V (1/40 C) in the conditions of CC/CV and 0.33 C at 45 °C using an electrochemical charger and discharger, and 400 cycles of charging and discharging were performed with discharging up to 2.5 V in the conditions of CC and 0.33 C as one cycle.

After one cycle of charging and discharging, the discharge capacity after one cycle was measured using an electrochemical charger and discharger, a state of charge (SOC) was adjusted to 50%, and a pulse of 2.5 C was then applied for 10 seconds to calculate initial resistance through a difference between a voltage before the pulse application and a voltage after the pulse application.

After 400 cycles of charging and discharging, the resistance after 400 cycles was calculated in the same manner as above, the resistance increase rate was calculated using the following equation, and the results are shown in Table 3 below.

Resistance increase rate (%) = (resistance after 400th cycle - initial resistance)/initial resistance × 100

**Reference Experimental Example B-2**

The lithium secondary batteries of Reference Examples 1B to 4B manufactured above were charged up to 4.2 V (1/40 C) in the conditions of CC/CV and 0.33 C at 45 °C using an electrochemical charger and discharger, and 400 cycles of charging and discharging were performed with discharging up to 2.5 V in the conditions of CC and 0.33 C as one cycle.

In this case, the volume of the lithium secondary batteries before performing charge and discharge (initial volume) and the volume of the lithium secondary batteries after 400 cycles were measured, and volume increase rate was calculated through Equation below, and the results are shown in Table 3 below.

Volume increase rate (%) = {(volume of lithium secondary battery after 400 cycles - initial volume)/(initial volume)} × 100

[Table 3]

| | Reference Experimental Example B-1 | Reference Experimental Example B-2 |
|---|---|---|
| | Resistance increase rate (%) | Volume increase rate (%) |
| Reference Example 1B | 16.6 | 4.3 |
| Reference Example 2B | 12.9 | 5.5 |
| Reference Example 3B | 19.3 | 4.1 |
| Reference Example 4B | 12.7 | 4.8 |

Referring to Table 3 above, in the case where $Li[Ni_{0.6}Co_{0.2}Mn_{0.2}]O_2$ was used as the positive electrode active material, it is seen that the secondary battery of Reference Example 1B, which used a non-aqueous electrolyte containing a specific amount of diethyl carbonate as an organic solvent and lithium bis(oxalato)borate as an additive, had no improvement in resistance and volume increase rate, compared to the secondary batteries of Reference Examples 2B to 4B. Accordingly, it is seen that the non-aqueous electrolyte according to the present invention may achieve the desired effect when the lithium transition metal oxide represented by Formula A is used as a positive electrode active material.

## Claims

1. A lithium secondary battery comprising:

a positive electrode;
a negative electrode;
a separator placed between the positive electrode and the negative electrode; and
a non-aqueous electrolyte,
wherein the positive electrode comprises a positive electrode active material,
the positive electrode active material comprises a lithium transition metal oxide represented by Formula A below,
the non-aqueous electrolyte comprises a lithium salt, an organic solvent, and an additive,
the organic solvent comprises linear carbonate,
the linear carbonate comprises diethyl carbonate,
the diethyl carbonate is present in an amount of 5 to 25 vol% with respect to a total volume of the organic solvent, and
the additive comprises lithium bis(oxalato)borate,

[Formula A] $Li_{1+x}[Ni_aCo_bMn_cM^1_d]O_{2+w}$

wherein in Formula A above, $0 \leq x \leq 0.5$, $a+b+c+d = 1$, $0.5 \leq a \leq 0.7$, $0 \leq b \leq 0.15$, $c=1-a-b-d$, $0 \leq d \leq 0.1$, $0 \leq b/a \leq 0.2$, $1 \leq a/c \leq 3$, and $0 \leq w \leq 1$, and
$M^1$ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

2. The lithium secondary battery of claim 1, having an operating voltage of 4.3 V or more.

3. The lithium secondary battery of claim 1, wherein the additive further comprises a compound represented by Formula 1 below:

[Formula 1]

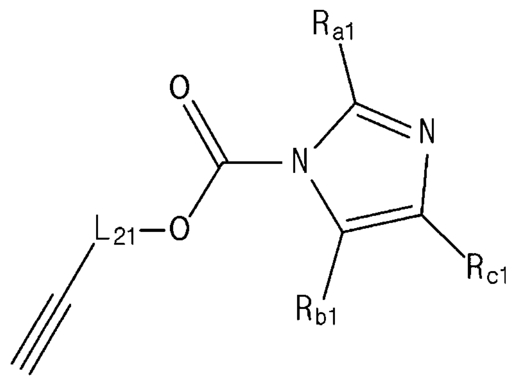

wherein in Formula 1 above, $R_{a1}$, $R_{b1}$, and $R_{c1}$ are each independently hydrogen, an alkyl group having 1 to 3 carbon atoms, or -CN, and $L_{21}$ is an alkylene group having 1 to 3 carbon atoms.

4. The lithium secondary battery of claim 1, wherein the non-aqueous electrolyte contains 0.01 wt% to 10 wt% of the lithium bis(oxalato)borate.

5. The lithium secondary battery of claim 1, wherein the diethyl carbonate is present in an amount of 7 to 15 vol% with respect to a total volume of the organic solvent.

6. The lithium secondary battery of claim 1, wherein the organic solvent further comprises cyclic carbonate.

7. The lithium secondary battery of claim 6, wherein the cyclic carbonate further comprises ethylene carbonate.

**8.** The lithium secondary battery of claim 6, wherein the cyclic carbonate and the linear carbonate are present at a volume ratio of 5:95 to 40:60.

**9.** The lithium secondary battery of claim 1, wherein the additive further comprises at least one selected from the group consisting of coumarine, fluoroethylene carbonate, vinylethylene carbonate, propane sultone, propene sultone, succinonitrile, adiponitrile, ethylene sulfate, lithium difluoro phosphate (LiDFP), lithium tetrafluoroborate ($LiBF_4$), lithium difluoro(oxalato)borate (LiDFOB), tris(trimethylsilyl) phosphate (TMSPa), and tris(trimethylsilyl) phosphite (TMSPi).

**10.** The lithium secondary battery of claim 1, wherein the non-aqueous electrolyte comprises the lithium salt at a molar concentration of 0.5 M to 5.0 M.

**11.** The lithium secondary battery of claim 1, wherein the positive electrode active material is in the form of a single particle formed of one single nodule or in the form of a quasi-single particle, a composite of 30 or fewer nodules.

**12.** The lithium secondary battery of claim 1, wherein in Formula A above, $a/(b \times c)$ is in a range of 18 to 50.

## INTERNATIONAL SEARCH REPORT

International application No. **PCT/KR2024/020707**

### A. CLASSIFICATION OF SUBJECT MATTER

**H01M 10/052**(2010.01)i; **H01M 4/525**(2010.01)i; **H01M 4/505**(2010.01)i; **H01M 4/131**(2010.01)i; **H01M 10/0569**(2010.01)i; **H01M 10/0567**(2010.01)i; **H01M 10/0568**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/052(2010.01); H01M 10/0525(2010.01); H01M 10/0567(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 비스(옥살레토)보레이트(lithium bis(oxalato)borate), 디에틸 카보네이트(diethyl carbonate), 비수 전해질(non-aqueous electrolyte), 리튬 이차전지(lithium secondary battery), 고전압(high voltage), 리튬 니켈계 금속 산화물(lithium nickel metal based oxide)

### C. DOCUMENTS CONSIDERED TO BE RELEVANT

| Category* | Citation of document, with indication, where appropriate, of the relevant passages | Relevant to claim No. |
|---|---|---|
| X<br>Y | CN 116093430 A (JIUJIANG TINCI MATERIALS TECHNOLOGY LTD.) 09 May 2023 (2023-05-09)<br>See claims 1 and 4; paragraphs [0046], [0050] and [0071]-[0083]; example 13; and table 1. | 1,2,4-10,12<br>3,11 |
| Y | KR 10-2022-0065686 A (LG ENERGY SOLUTION, LTD.) 20 May 2022 (2022-05-20)<br>See claim 1; and paragraphs [0066] and [0078]-[0080]. | 3 |
| Y | KR 10-2023-0098072 A (LG ENERGY SOLUTION, LTD.) 03 July 2023 (2023-07-03)<br>See claim 1; and paragraphs [0047] and [0049]. | 11 |
| A | KR 10-2154909 B1 (UMICORE et al.) 11 September 2020 (2020-09-11)<br>See claims 1-13. | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 March 2025** | **27 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/020707**

**C. DOCUMENTS CONSIDERED TO BE RELEVANT**

| Category* | Citation of document, with indication, where appropriate, of the relevant passages | Relevant to claim No. |
|---|---|---|
| A | KR 10-2016-0085783 A (SHENZHEN CAPCHEM TECHNOLOGY CO., LTD.) 18 July 2016 (2016-07-18)<br>See entire document. | 1-12 |

Form PCT/ISA/210 (second sheet) (July 2022)

**INTERNATIONAL SEARCH REPORT**
**Information on patent family members**

International application No.
**PCT/KR2024/020707**

| Patent document cited in search report | | | Publication date (day/month/year) | Patent family member(s) | | | Publication date (day/month/year) |
|---|---|---|---|---|---|---|---|
| CN | 116093430 | A | 09 May 2023 | CN | 116093430 | B | 24 November 2023 |
| | | | | WO | 2024-093659 | A1 | 10 May 2024 |
| KR | 10-2022-0065686 | A | 20 May 2022 | CN | 116134640 | A | 16 May 2023 |
| | | | | EP | 4170773 | A1 | 26 April 2023 |
| | | | | US | 2023-0335795 | A1 | 19 October 2023 |
| | | | | WO | 2022-103101 | A1 | 19 May 2022 |
| KR | 10-2023-0098072 | A | 03 July 2023 | CN | 118339677 | A | 12 July 2024 |
| | | | | EP | 4425611 | A1 | 04 September 2024 |
| | | | | JP | 2024-546664 | A | 26 December 2024 |
| | | | | KR | 10-2641896 | B1 | 29 February 2024 |
| | | | | US | 2023-0207799 | A1 | 29 June 2023 |
| | | | | WO | 2023-121389 | A1 | 29 June 2023 |
| KR | 10-2154909 | B1 | 11 September 2020 | CN | 107949949 | A | 20 April 2018 |
| | | | | CN | 107949949 | B | 26 March 2021 |
| | | | | EP | 3350865 | A1 | 25 July 2018 |
| | | | | EP | 3350865 | B1 | 12 February 2020 |
| | | | | HU | E049092 | T2 | 28 August 2020 |
| | | | | JP | 2018-527718 | A | 20 September 2018 |
| | | | | JP | 2020-174053 | A | 22 October 2020 |
| | | | | JP | 6744009 | B2 | 19 August 2020 |
| | | | | JP | 7116123 | B2 | 09 August 2022 |
| | | | | KR | 10-2018-0043845 | A | 30 April 2018 |
| | | | | KR | 10-2019-0116584 | A | 14 October 2019 |
| | | | | PL | 3350865 | T3 | 27 July 2020 |
| | | | | TW | 201717468 | A | 16 May 2017 |
| | | | | TW | I616013 | B | 21 February 2018 |
| | | | | US | 10804566 | B2 | 13 October 2020 |
| | | | | US | 11688883 | B2 | 27 June 2023 |
| | | | | US | 2018-0254525 | A1 | 06 September 2018 |
| | | | | US | 2020-0335824 | A1 | 22 October 2020 |
| | | | | WO | 2017-046723 | A1 | 23 March 2017 |
| KR | 10-2016-0085783 | A | 18 July 2016 | CN | 104269577 | A | 07 January 2015 |
| | | | | CN | 109346760 | A | 15 February 2019 |
| | | | | JP | 2016-536776 | A | 24 November 2016 |
| | | | | US | 10084205 | B2 | 25 September 2018 |
| | | | | US | 2016-0301104 | A1 | 13 October 2016 |
| | | | | WO | 2016-049953 | A1 | 07 April 2016 |

Form PCT/ISA/210 (patent family annex) (July 2022)